# EUROPEAN PATENT APPLICATION

(11) **EP 4 797 795 A1**
(43) Date of publication of application: **26.08.2026**
(21) Application number: 24890465.8
(22) Date of filing: 25.10.2024
(51) Int. Cl.: H04W 36/04

(54) **COMMUNICATION METHOD AND APPARATUS**

(30) Priority: 13.11.2023 CN 202311515248
(71) Applicant: HUAWEI TECHNOLOGIES CO., LTD., Shenzhen, Guangdong 518129 (CN)
(72) Inventor: WANG, Yu, Shenzhen, Guangdong 518129 (CN)
(74) Representative: Thun, Clemens
(86) International application number: PCT/CN2024/127460
(87) International publication number: WO 2025/103108

(57) **Abstract**

This application relates to the communication field, and discloses a communication method and apparatus. The communication method includes: A first terminal first receives, from a source network device, first information indicating whether a beam position in which the first terminal is located is in a first beam position set of the source network device. Each beam position in the first beam position set includes a beam position of a target network device. Then the first terminal performs mobility management based on the first information. In this way, mobility management efficiency of a terminal is improved.

## Description

This application claims priority to Chinese Patent Application No. 202311515248.7, filed with the China National Intellectual Property Administration on November 13, 2023 and entitled "COMMUNICATION METHOD AND APPARATUS", which is incorporated herein by reference in its entirety.

### TECHNICAL FIELD

This application relates to the communication field, and in particular, to a communication method and apparatus.

### BACKGROUND

A satellite-terrestrial integrated communication network is a technology that combines a non-terrestrial network (non-terrestrial network, NTN) and a terrestrial network (terrestrial network, TN) to provide a communication service. The satellite-terrestrial integrated communication network uses a unified network architecture and standard system, uses integrated wireless access, transmission, and network technologies, and integrated satellite-terrestrial coordinated wireless resource allocation and service management, to provide broadband or narrowband access services for various communication devices, meeting requirements of space-based, air-based, sea-based, and land-based users for communication anytime and anywhere.

In existing NR/an existing NTN, since mobility management (for example, reselection or redirection) of a terminal is usually designed for a satellite network or a terrestrial network separately, not for a satellite-terrestrial integrated network scenario, mobility management of the terminal in this scenario is not efficient.

### SUMMARY

This application provides a communication method and apparatus, to improve mobility management efficiency of a terminal.

To achieve the foregoing objective, the following technical solutions are used in this application.

According to a first aspect, a communication method is provided. The method is applied to a terminal. The method may be performed by the terminal, or may be performed by a component or an apparatus (for example, a processor, a chip, or a chip system) used in the terminal, or may be performed by a logical module or software that can implement all or some functions of the terminal. The method includes: first receiving first information indicating whether a beam position in which a first terminal is located is in a first beam position set of a source network device, where each beam position in the first beam position set includes a beam position of a target network device; and then performing mobility management based on the first information.

In the first aspect, the source network device indicates, to the first terminal by using the first information, whether the beam position in which the first terminal is located is in the first beam position set, and the first terminal may perform mobility management based on the first information, to reduce signaling overheads of mobility management of the first terminal, thereby improving mobility management efficiency of the first terminal.

In an implementation, the first information includes beam position model information of the first beam position set and indication information of the beam position in the first beam position set. The first terminal is in an idle state or an inactive state. The performing mobility management based on the first information includes: determining, based on the beam position model information and location information of the first terminal, the beam position in which the first terminal is located; and performing, when the beam position in which the first terminal is located is a beam position indicated by the indication information, cell reselection on a cell covered by the target network device.

In this implementation, in a scenario in which the first terminal is in the idle state or the inactive state, the first terminal determines whether the beam position in which the first terminal is located is in the first beam position set, and performs, when the beam position in which the first terminal is located is in the first beam position set, cell reselection on the cell covered by the target network device, thereby improving mobility management efficiency of the first terminal.

In an implementation, the first terminal is in an idle state or an inactive state. The performing mobility management based on the first information includes: performing, when the beam position in which the first terminal is located is in the first beam position set, cell reselection on a cell covered by the target network device.

In this implementation, in a scenario in which the first terminal is in the idle state or the inactive state, the first information directly indicates whether the beam position in which the first terminal is located is in the first beam position set, and performs, when the beam position in which the first terminal is located is in the first beam position set, cell reselection on the cell covered by the target network device, thereby improving mobility management efficiency of the first terminal.

In an implementation, the performing cell reselection on the cell covered by the target network device may include: receiving second information, where the second information is used to perform cell reselection on the cell covered by the target network device; and performing, based on the second information, cell reselection on the cell covered by the target network device.

In this implementation, after it is determined that the beam position in which the first terminal is located is in the first beam position set, the source network device configures, for the first terminal, the second information used to perform cell reselection, thereby ensuring reliability of cell reselection performed by the first terminal. In addition, signaling overheads of the second information are reduced when the beam position in which the first terminal is located is not in the first beam position set.

In an implementation, the source network device is a non-terrestrial communication network device, and the target network device is a terrestrial communication network device; or the source network device is a terrestrial communication network device, and the target network device is a non-terrestrial communication network device.

In this implementation, possible application scenarios of this application are enriched. The source network device and the target network device each may be the terrestrial communication network device or the non-terrestrial communication network device.

In an implementation, when the first terminal is in a connected state, the performing mobility management based on the first information may include: receiving third information, where the third information indicates a redirection condition; and redirecting to the target network device when the first terminal meets the redirection condition and the beam position in which the first terminal is located is in the first beam position set, where the source network device is a non-terrestrial communication network device, and the target network device is a terrestrial communication network device.

In this implementation, the first terminal may determine, based on the received redirection condition and depending on whether the beam position in which the first terminal is located is in the first beam position set, whether to redirect to the target network device or re-access the source network device, to reduce a mobility management frequency, thereby improving mobility management efficiency of the first terminal.

In an implementation, the method may further include receiving fourth information, where the fourth information indicates first time for redirecting to the target network device. The performing redirection on the target network device may include: performing redirection on the target network device within the first time.

In this implementation, the source network device indicates, to the terminal, the first time for redirecting to the target network device, so that the terminal can perform redirection at correct time, thereby improving mobility management effectiveness.

In an implementation, the method may further include: re-accessing the source network device when the first terminal does not meet the redirection condition and/or the beam position in which the first terminal is located is not in the first beam position set.

In this implementation, the first terminal may determine, based on the redirection condition and depending on whether the beam position in which the first terminal is located is in the first beam position set, whether to redirect to the target network device or re-access the source network device, to reduce a mobility management frequency, thereby improving mobility management efficiency of the first terminal.

In an implementation, the method may further include: receiving fifth information, where the fifth information indicates second time at which the source network device starts a service. The re-accessing the source network device may include: re-accessing the source network device at the second time.

In this implementation, the source network device indicates, to the first terminal, the time at which the source network device starts the service, so that it can be ensured that the source network device is re-accessed, thereby improving mobility management effectiveness.

According to a second aspect, a communication method is provided. The method is applied to a source network device. The method may be performed by the source network device, or may be performed by a component or an apparatus (for example, a processor, a chip, or a chip system) used in the source network device, or may be performed by a logical module or software that can implement all or some functions of the source network device. The method includes: obtaining and sending first information indicating whether a beam position in which a first terminal is located is in a first beam position set of the source network device, where each beam position in the first beam position set includes a beam position of a target network device, and the first information may be used by the first terminal to perform mobility management on the first terminal.

In the second aspect, the source network device indicates, to the first terminal by using the first information, whether the beam position in which the first terminal is located is in the first beam position set of the source network device, and the first terminal may perform mobility management based on the first information, to reduce signaling overheads of mobility management of the first terminal, thereby improving mobility management efficiency of the first terminal.

In an implementation, the method further includes: sending second information, where the second information is used by the first terminal to perform cell reselection on a cell covered by the target network device.

In this implementation, the source network device configures, for the first terminal, the second information used to perform cell reselection, thereby ensuring reliability of cell reselection performed by the first terminal.

In an implementation, the source network device is a non-terrestrial communication network device, and the target network device is a terrestrial communication network device; or the source network device is a terrestrial communication network device, and the target network device is a non-terrestrial communication network device.

In this implementation, possible application scenarios of this application are enriched. The source network device and the target network device each may be the terrestrial communication network device or the non-terrestrial communication network device.

In an implementation, the method further includes: sending third information, where the third information indicates a redirection condition.

In this implementation, the source network device sends the third information indicating the redirection condition, and the first terminal may determine, based on the received redirection condition and depending on whether the beam position in which the first terminal is located is in the first beam position set, whether to redirect to the target network device or re-access the source network device, to reduce a mobility management frequency, thereby improving mobility management efficiency of the first terminal.

In an implementation, the method further includes: sending fourth information, where the fourth information indicates first time for redirecting to the target network device.

In this implementation, the source network device indicates, to the terminal, the first time for redirecting to the target network device, so that the terminal can perform redirection at correct time, thereby improving mobility management effectiveness.

In an implementation, the method further includes: sending fifth information, where the fifth information indicates second time at which the source network device starts a service.

In this implementation, the source network device indicates, to the first terminal, the time at which the source network device starts the service, so that it can be ensured that the source network device is re-accessed, thereby improving mobility management effectiveness.

In an implementation, the method further includes: receiving first beam position information of a beam position that is of the source network device and in which at least one second terminal is located and/or second beam position information of a beam position that is of the target network device and in which the at least one second terminal is located, where the first beam position information and the second beam position information are used to determine the first information.

In this embodiment of this application, the source network device receives a first beam position that is of the source network device and in which the second terminal is located and/or a second beam position that is of the target network device and in which the second terminal is located, so that the source network device can determine a more accurate second beam position set and/or third beam position set, and apply the more accurate second beam position set and/or third beam position set to the mobility management of the first terminal, thereby improving mobility management effectiveness.

According to a third aspect, this application provides a communication apparatus. The communication apparatus may be a first terminal, or a chip or a system-on-a-chip in the first terminal. The communication apparatus may implement functions performed by the first terminal in the foregoing first aspect or possible designs of the first aspect, and the functions may be implemented by hardware, or may be implemented by hardware by executing corresponding software. The hardware or the software includes one or more modules corresponding to the foregoing functions. For example, the communication apparatus includes: a transceiver module, configured to receive first information, where the first information indicates whether a beam position in which a first terminal is located is in a first beam position set of a source network device, and each beam position in the first beam position set includes a beam position of a target network device; and a processing module, configured to perform mobility management based on the first information.

In an implementation, the first information includes beam position model information of the first beam position set and indication information of the beam position in the first beam position set. The first terminal is in an idle state or an inactive state. The processing module is specifically configured to: determine, based on the beam position model information and location information of the first terminal, the beam position in which the first terminal is located; and perform, when the beam position in which the first terminal is located is a beam position indicated by the indication information, cell reselection on a cell covered by the target network device.

In an implementation, when the first terminal is in an idle state or an inactive state, the processing module is specifically configured to perform, when the first information indicates that the beam position in which the first terminal is located is in the first beam position set, cell reselection on a cell covered by the target network device.

In an implementation, the first terminal is in the idle state or the inactive state. The processing module is specifically configured to perform, when the beam position in which the first terminal is located is in the first beam position set, cell reselection on a cell covered by the target network device.

In an implementation, the source network device is a non-terrestrial communication network device, and the target network device is a terrestrial communication network device; or the source network device is a terrestrial communication network device, and the target network device is a non-terrestrial communication network device.

In an implementation, when the first terminal is in a connected state, the processing module is specifically configured to: control the transceiver module to receive third information, where the third information indicates a redirection condition; and redirect to the target network device when the first terminal meets the redirection condition and the beam position in which the first terminal is located is in the first beam position set, where the source network device is a non-terrestrial communication network device, and the target network device is a terrestrial communication network device.

In an implementation, the transceiver module is further configured to receive fourth information, where the fourth information indicates first time for redirecting to the target network device. The processing module is specifically configured to redirect to the target network device within the first time.

In an implementation, the processing module is further configured to re-access the source network device when the first terminal does not meet the redirection condition and/or the beam position in which the first terminal is located is not in the first beam position set.

In an implementation, the transceiver module is further configured to receive fifth information, where the fifth information indicates second time at which the source network device starts a service. The processing module is specifically configured to re-access the source network device at the second time.

According to a fourth aspect, this application provides a communication apparatus. The communication apparatus may be a source network device, or a chip or a system-on-a-chip in the source network device. The communication apparatus may implement functions performed by the source network device in the foregoing first aspect or the possible designs of the first aspect, and the functions may be implemented by hardware, or may be implemented by hardware by executing corresponding software. The hardware or the software includes one or more modules corresponding to the foregoing functions. For example, the communication apparatus includes a transceiver module, configured to obtain and send first information, where the first information indicates whether a beam position in which a first terminal is located is in a first beam position set of a source network device, and each beam position in the first beam position set includes a beam position of a target network device. The first information is used to perform mobility management on the first terminal.

In an implementation, the transceiver module is further configured to send second information, where the second information is used by the first terminal to perform cell reselection on a cell covered by the target network device.

In an implementation, the source network device is a non-terrestrial communication network device, and the target network device is a terrestrial communication network device; or the source network device is a terrestrial communication network device, and the target network device is a non-terrestrial communication network device.

In an implementation, the transceiver module is further configured to send third information, where the third information indicates a redirection condition.

In an implementation, the transceiver module is further configured to send fourth information, where the fourth information indicates first time for redirecting to the target network device.

In an implementation, the transceiver module is further configured to send fifth information, where the fifth information indicates second time at which the source network device starts a service.

In an implementation, the transceiver module is further configured to receive first beam position information of a beam position that is of the source network device and in which at least one second terminal is located and/or second beam position information of a beam position that is of the target network device and in which the at least one second terminal is located, where the first beam position information and the second beam position information are used to determine the first information.

According to a fifth aspect, this application provides a communication apparatus. The communication apparatus includes a processor and a transceiver. The processor and the transceiver are configured to support the communication apparatus in performing the method in the first aspect or the second aspect. Further, the communication apparatus may further include a memory. The memory stores computer instructions, and the processor may run the computer instructions to perform the method in the first aspect or the second aspect. Further, the communication apparatus may further include a transceiver, and the transceiver is configured to perform the method in the first aspect or the second aspect.

According to a sixth aspect, this application provides a computer-readable storage medium. The computer-readable storage medium stores computer instructions. When the computer instructions are run, the method in the first aspect or the second aspect is performed.

According to a seventh aspect, this application provides a computer program product including instructions. When the instructions are run on a computer, the computer is caused to perform the method in the first aspect or the second aspect.

According to an eighth aspect, this application provides a chip. The chip includes a processor and a transceiver. The processor and the transceiver are configured to support a communication apparatus in performing the method in the first aspect or the second aspect.

According to a ninth aspect, this application provides a communication system. The communication system includes a terminal and a network device. The terminal is configured to perform the method in the first aspect. The network device is configured to perform the method in the second aspect.

For beneficial effects described in the third aspect to the ninth aspect of this application, correspondingly refer to analysis of beneficial effects in the first aspect or the second aspect. Details are not described herein again.

### BRIEF DESCRIPTION OF DRAWINGS

FIG. 1 is a diagram of a cell coverage scenario according to an embodiment of this application;
FIG. 2 is a diagram of another cell coverage scenario according to an embodiment of this application;
FIG. 3 is a diagram of another cell coverage scenario according to an embodiment of this application;
FIG. 4 is a diagram of a group handover scenario according to an embodiment of this application;
FIG. 5 is a diagram of a communication system according to an embodiment of this application;
FIG. 6 is a schematic flowchart of a communication method according to an embodiment of this application;
FIG. 7 is a diagram of a beam position according to an embodiment of this application;
FIG. 8 is a schematic flowchart of another communication method according to an embodiment of this application;
FIG. 9 is a diagram of a communication scenario according to an embodiment of this application;
FIG. 10 is a diagram of another communication scenario according to an embodiment of this application;
FIG. 11 is a schematic flowchart of another communication method according to an embodiment of this application;
FIG. 12 is a schematic flowchart of another communication method according to an embodiment of this application;
FIG. 13 is a schematic flowchart of another communication method according to an embodiment of this application;
FIG. 14 is a diagram of another communication scenario according to an embodiment of this application;
FIG. 15 is a diagram of another communication scenario according to an embodiment of this application;
FIG. 16 is a diagram of another communication scenario according to an embodiment of this application;
FIG. 17 is a diagram of another communication scenario according to an embodiment of this application;
FIG. 18 is a schematic flowchart of another communication method according to an embodiment of this application;
FIG. 19 is a schematic flowchart of another communication method according to an embodiment of this application;
FIG. 20 is a diagram of a structure of a communication apparatus according to an embodiment of this application;
FIG. 21 is a diagram of a structure of another communication apparatus according to an embodiment of this application; and
FIG. 22 is a diagram of a structure of another communication apparatus according to an embodiment of this application.

### DESCRIPTION OF EMBODIMENTS

A network architecture and a service scenario described in embodiments of this application are intended to describe the technical solutions in embodiments of this application more clearly, but constitute no limitation on the technical solutions provided in embodiments of this application. A person of ordinary skill in the art may learn that the technical solutions provided in embodiments of this application are also applicable to a similar technical problem as the network architecture evolves and a new service scenario emerges.

It should be noted that terms "first", "second", and the like in the specification, the claims, and the accompanying drawings of this application are used to distinguish between different objects, instead of being used to describe a specific order. In addition, terms "include", "have", and any variant thereof are intended to cover a non-exclusive inclusion. For example, a process, a method, a system, a product, or a device that includes a series of steps or units is not limited to the listed steps or units, and instead, further optionally includes a step or a unit that is not listed, or further optionally includes another step or unit that is intrinsic to the process, the method, the product, or the device.

It should be understood that, in embodiments of this application, "at least one (item)" means one or more, "a plurality of" means two or more, "at least two (items)" means two, three, or more, and the term "and/or" is used to describe an association relationship between associated objects and indicates that three relationships may exist. For example, "A and/or B" may indicate the following three cases: Only A exists, only B exists, and both A and B exist, where A and B may be singular or plural. The character "/" generally indicates an "or" relationship between associated objects. "At least one of the following items (pieces)" or a similar expression thereof refers to any combination of these items, including a single item (piece) or any combination of a plurality of items (pieces). For example, at least one (item) of a, b, or c may indicate a, b, c, "a and b", "a and c", "b and c", or "a, b, and c", where a, b, and c may be singular or plural. It should be understood that in embodiments of this application, "B corresponding to A" represents that B is associated with A. For example, B may be determined based on A. It should be further understood that determining B based on A does not mean that B is determined based only on A. B may alternatively be determined based on A and/or other information. In addition, in embodiments of this application, "connection" means various connection manners such as a direct connection or an indirect connection to achieve communication between devices. This is not limited in embodiments of this application.

Unless otherwise specified, "transmission" (transmit/transmission) in embodiments of this application refers to bidirectional transmission, and includes a sending action and/or a receiving action. Specifically, "transmission" in embodiments of this application includes data sending, data receiving, or data sending and receiving. In other words, data transmission herein includes uplink data transmission and/or downlink data transmission. Data may include a channel and/or a signal. The uplink data transmission is uplink channel transmission and/or uplink signal transmission, and the downlink data transmission is downlink channel transmission and/or downlink signal transmission. In embodiments of this application, a "network" and a "system" express a same concept, and a communication system is a communication network.

Before embodiments of this application are described, some terms in embodiments of this application are explained.

A beam position is also referred to as a region or a geographical region. Certainly, there may be another name. A name of a region that is fixed relative to the earth is not specifically limited in this application. Specifically, the beam position is fixed relative to the earth, or it is understood that the beam position refers to a geographical region that is fixed relative to the earth. For example, the beam position may have at least one of the following attributes: a shape, a contour, a size, a radius, an area, and a geographical location.

The "beam position" may also have a height attribute, that is, the beam position may be understood as a geographical region at a given height or within a given height range. By default, the beam position may be a geographical region at an altitude of 0 kilometers (km) or at an altitude around 0 km (for example, within a range of [-2, 2] km) on the ground, or a geographical region at an average altitude. In addition, the beam position may alternatively be another geographical region at a specific height or within a specific height range, for example, a geographical region at an altitude of 10 km, or a geographical region at an altitude around 10 km (for example, within a range of [7, 13] km).

Shapes, contours, sizes, radii, and areas of different beam positions may be the same or different. Different beam positions have different geographical locations. Different beam positions may or may not overlap.

In a possible implementation, that the beam position is fixed relative to the earth may be understood as follows: The contour, the size, or the geographical location of the beam position remains unchanged. For example, the contour, the size, or the geographical location of the beam position does not change with time. Alternatively, that the beam position is fixed relative to the earth may be understood as follows. The contour of the beam position and points in the beam position may be described by using a three-dimensional coordinate system such as an earth-centered earth-fixed (earth-centered earth-fixed, ECEF) coordinate system, a geodetic coordinate system (geodetic coordinate system), or an earth-centered inertial (earth-centered inertial, ECI) coordinate system, or coordinates of each point on the contour of the beam position in the three-dimensional coordinate system such as the ECEF coordinate system, the geodetic coordinate system, or the ECI coordinate system are fixed and unchanged.

In a possible implementation, the shape of the beam position may be a regular hexagon, or another shape such as a regular pentagon, a circle, or an ellipse. Alternatively, the shape of the beam position may be an irregular shape. This is not limited.

For example, the shape of the beam position may be defined in a protocol, or may be defined by a network device. Shapes of beam positions defined by different network devices may be the same or may be different. A same network device may also define a plurality of shapes of beam positions. Similarly, the size, the radius, and the area of the beam position may also be defined in the protocol, or may be defined by the network device. Sizes, radii, and areas of beam positions defined by different network devices may be the same or may be different. A same network device may also define a plurality of sizes, radii, or areas of beam positions.

One beam position may be served by one or more cells of the network device. This is not limited.

In an NTN, compared with terrestrial communication, satellite communication has unique advantages. For example, the satellite communication can provide wider coverage, and a satellite base station is not vulnerable to a natural disaster or an external force. Supporting communication with the ground and a satellite is an inevitable trend of a fifth generation mobile communication technology (5th generation mobile communication technology, 5G) and even sixth generation mobile communication standard (6th generation mobile networks, 6G) communication in the future, offering significant advantages in terms of wide coverage, reliability, multi-connectivity, and a high throughput.

Satellite communication is generally exhibiting an ultra-dense and heterogeneous trend. Specifically, first, a scale of the satellite communication has increased from 66 satellites in an Iridium constellation to 720 satellites in a OneWeb constellation, and finally to 12000+ satellites in a starlink (starlink) ultra-dense low-orbit earth satellite constellation. Second, the satellite communication presents a heterogeneous feature, and a conventional single-layer communication network gradually evolves to a multi-layer communication network. Satellite communication is increasingly compatible, and functions tend to be complex and diversified. For example, functions such as navigation enhancement, earth observation, and multi-dimensional information in-orbit processing may be implemented.

In an architecture of the NTN, NTN cells may be classified into the following three types based on mobility features of the NTN cells in a terrestrial coverage region.

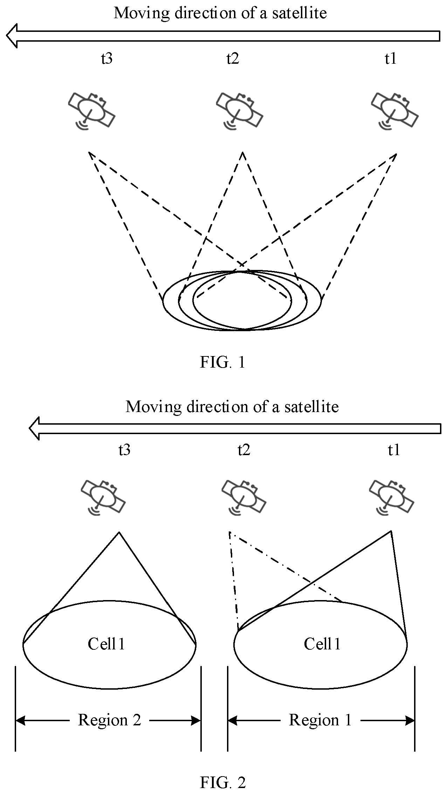

A first type is an earth-fixed (earth-fixed) type. As shown in FIG. 1, a coverage region of an NTN cell of this type is fixed as a region on the ground, that is, continuous fixed-point coverage is provided. An NTN cell provided by a high elliptical orbit satellite (high elliptical orbit satellite, GEO) is of this type.

A second type is a quasi-earth-fixed (quasi-earth-fixed) type. As shown in FIG. 2, a coverage region of an NTN cell of this type is fixed as a region: a region 1 on the ground within a period of time from t1 to t2, and is changed to another region: a region 2 on the ground at t3, that is, fixed-point coverage is provided within a time period. Low earth orbit satellite (Low Earth Orbit Satellite, LEO) and medium orbit satellite (medium orbit earth satellite, MEO) can provide NTN cells of this type. The earth-fixed type and the quasi-earth-fixed type may be collectively referred to as a gazing type.

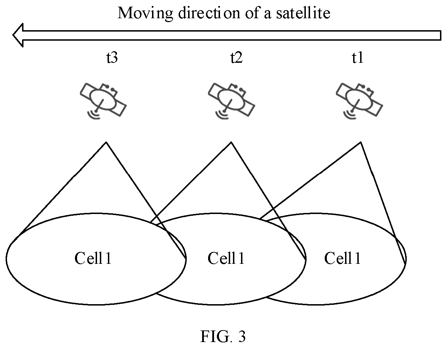

A third type is an earth-moving type (earth-moving, which may also be referred to as a non-gazing type). As shown in FIG. 3, a coverage region of an NTN cell of this type slides on the ground. The coverage region varies at different time t1, t2, and t3. The LEO and the MEO can provide NTN cells of this type.

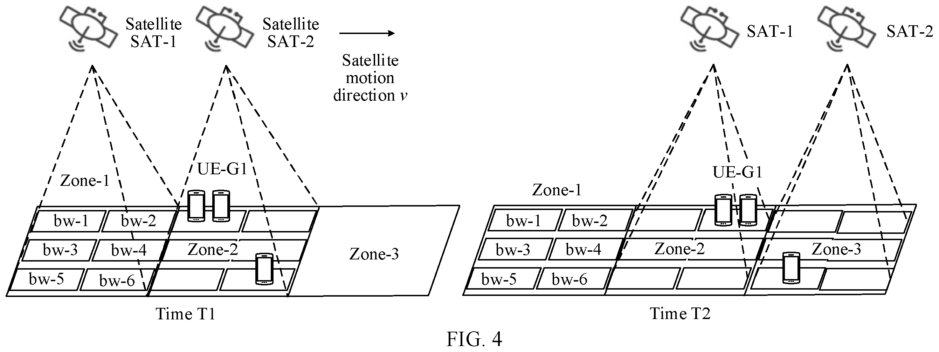

The NTN is characterized by frequent terminal handover and long interruption duration during terminal movement. For example, in a beam hopping satellite communication system, because a satellite moves at a high speed of approximately 7.5 km/s, group handover/group reselection occurs approximately every few seconds to tens of seconds. However, motion of the satellite may cause a terminal in a beam position in a region to perform group handover or group reselection. In other words, in a beam hopping LEO satellite network, group handover/group reselection of a terminal becomes normal. The group handover is used as an example. As shown in FIG. 4, within time T1, a UE cluster UE-G1 (where the UE-G1 includes a plurality of UEs) in a single beam position in a region Zone-2 is served by one or more beams of a satellite SAT-2. However, within time T2, motion of the satellite SAT-2 causes a beam of the satellite SAT-2 to fail to continue to serve the UE-G1. In this case, one or more beams of a satellite SAT-1 take over the service for the UE-G1. This means that the UE-G1 performs group handover.

In existing NR/an existing NTN, mobility management (for example, reselection or redirection) of a terminal is usually designed for a satellite network or a terrestrial network separately. In a satellite-terrestrial integrated network scenario, it is difficult for the terminal to efficiently determine when and where to perform efficient mobility management (for example, reselection from a TN to an NTN or reselection from an NTN to a TN), and both signaling overheads and measurement overheads are high. It can be learned that in this scenario, the terminal has low mobility management efficiency.

To resolve the foregoing technical problem, embodiments of this application provide a communication method. The method provided in embodiments of this application is described in detail below with reference to the accompanying drawings of this specification.

The communication method provided in embodiments of this application may be applied to various communication systems, for example, a satellite communication system, a high altitude platform station (high altitude platform station, HAPS) communication system, and a non-terrestrial network (non-terrestrial network, NTN) system such as an uncrewed aerial vehicle. Descriptions are provided below by using an example in which the communication system is a satellite communication system. The satellite communication system may include an integrated communication and navigation (integrated communication and navigation, IcaN) system, a global navigation satellite system (global navigation satellite system, GNSS), an ultra-dense low-orbit satellite communication system, and the like. The satellite communication system may be integrated with a conventional mobile communication system. For example, the conventional mobile communication system may be a long term evolution (long term evolution, LTE) system, a 5G mobile communication system, a wireless fidelity (wireless fidelity, Wi-Fi) system, a future communication system, a worldwide interoperability for microwave access (worldwide interoperability for microwave access, WiMAX) communication system, or a system integrating a plurality of communication systems. This is not limited in embodiments of this application. The satellite communication system includes a transparent transmission satellite architecture and a non-transparent transmission satellite architecture. Transparent transmission is also referred to as bent pipe forwarding transmission, that is, a signal only undergoes process such as frequency conversion and signal amplification on a satellite, and the satellite is transparent to the signal as if the satellite does not exist. Non-transparent transmission is also referred to as regenerative (on-board access/processing) transmission. That is, the satellite has some or all of functions of a base station. 5G may also be referred to as a new radio (new radio, NR).

For example, the communication system includes a terminal, an access network device, a core network device, and a ground station device.

The terminal (terminal equipment) includes a mobile device that supports an air interface (the air interface may be various types of air interfaces, for example, a 5G air interface), and may connect to a satellite network through the air interface and initiate a service such as a call or a network access service. The terminal includes various handheld devices, on-board devices, wearable devices, or computing devices that have a wireless communication function, or another processing device connected to a wireless modem, and may specifically refer to a user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal may alternatively be a satellite phone, a cellular phone, a smartphone, a wireless data card, a wireless modem, a machine-type communication device, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, an on-board device or a wearable device, a virtual reality (virtual reality, VR) terminal, an augmented reality (augmented reality, AR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a terminal in a 5G network or a future communication network, or the like. In embodiments of this application, an apparatus configured to implement a function of the terminal may be a terminal, or may be an apparatus that can support the terminal in implementing the function, for example, a chip system. The apparatus may be installed in the terminal or used together with the terminal. In embodiments of this application, the communication system is described by using an example in which the terminal is the UE.

The access network device (in this application, the access network device is referred to as a network device for short) is mainly configured to implement at least one of functions of resource scheduling, radio resource management, and radio resource control of the terminal. The access network device may be an access network device in a third generation partnership project (3rd generation partnership project, 3GPP), for example, an access network device in a 4G network, a 5G network, or a future-oriented 6G network. The access network device may alternatively be an access network device of an open access network (open RAN, O-RAN, or ORAN), a cloud radio access network (cloud radio access network, CRAN), or two or more of the foregoing networks. Specifically, the access network device may include any node of a base station, a wireless access point, a transmission receive point (transmission receive point, TRP), a transmission point (transmission point, TP), and some other access node. The access network device and the core network device communicate with each other in a wired or wireless manner, for example, through a next generation (next generation, NG) interface. Different access network devices may exchange signaling such as handover through an Xn interface. In embodiments of this application, an apparatus configured to implement a function of the access network device may be the access network device, or may be an apparatus that can support the access network device in implementing the function, for example, a chip system. The apparatus may be installed in the access network device or used together with the access network device. In embodiments of this application, the communication system is described by using an example in which the access network device is the base station.

The core network device is responsible for maintaining subscription data of a mobile network, and providing functions such as session management, mobility management, policy management, and security authentication for the terminal. The core network device may include the following network elements: a user plane function (user plane function, UPF), an authentication service function (authentication server function, AUSF), an authentication management function (authentication management function, AMF), a session management function (session management function, SMF), a network exposure function (network exposure function, NEF), a network function repository function (network function repository function, NRF), a policy control function (policy control function, PCF), and a unified data management (unified data management, UDM). Optionally, the core network device may further include an application function (application function, AF) and a unified data repository (Unified Data Repository, UDR). For descriptions of the foregoing network elements, refer to the conventional technologies. Details are not described.

A ground station (ground station) device is an integral part of a satellite or a space system, and is equipped with a terrestrial device for space communication on earth, such as a gateway gateway device. Generally, the ground station device refers to a terrestrial device that is installed on a surface of the earth (including a device installed on a ship and an aircraft) for artificial satellite communication. The ground station device mainly includes a high-gain antenna system that can track an artificial satellite, a high-power microwave transmission system, a low-noise receiving system, a power supply system, and the like. The ground station device is responsible for forwarding signaling and service data between an access network device and a core network device.

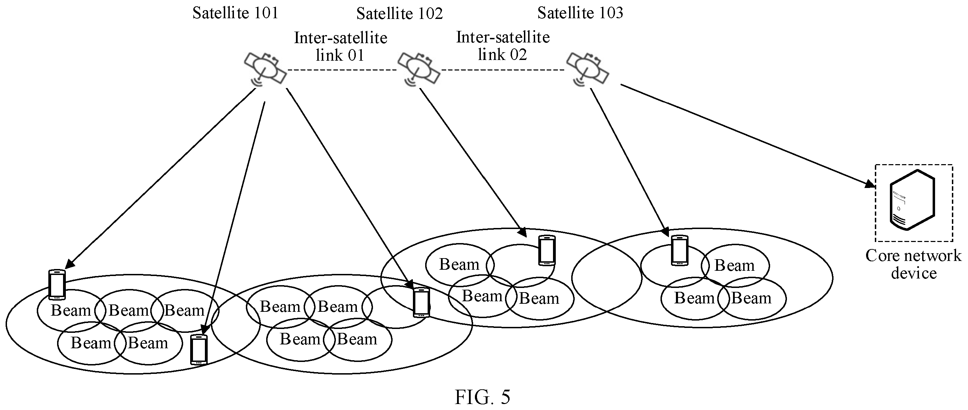

FIG. 5 is a diagram of a communication system according to an embodiment of this application. The satellite communication system includes a satellite 101, a satellite 102, and a satellite 103. Each satellite may provide a communication service, a navigation service, a positioning service, and the like for the terminal by using a plurality of beams, and the satellite 103 is connected to a core network device. The satellite uses a plurality of beams to cover a service region, and different beams may be used to perform communication in one or more manners of time division, frequency division, and space division. The satellite performs wireless communication with the terminal by using a broadcast communication signal, a navigation signal, and the like. The satellite may perform wireless communication with the core network device. The satellite in this embodiment of this application may be a satellite base station, may include an orbit receiver or a repeater configured to relay information, or may be a network side device mounted to the satellite.

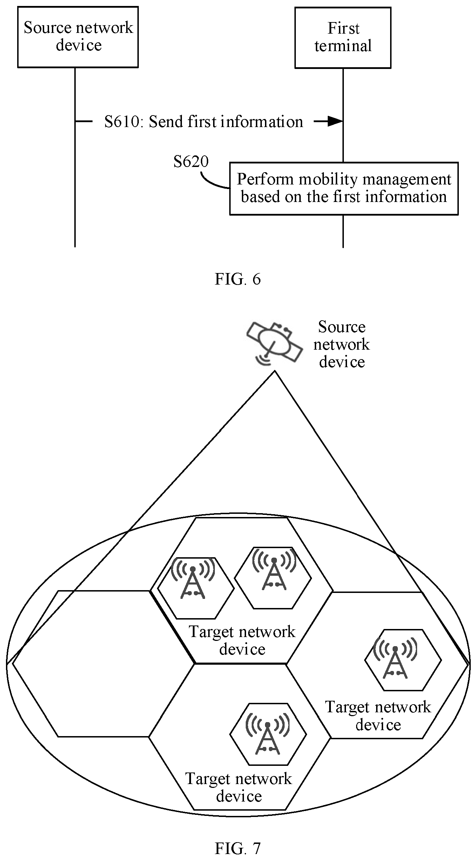

In embodiments of this application, to improve mobility management efficiency of a terminal, a specific mobility management design is provided for a possible communication scenario (for example, reselection or redirection) of the terminal, so that the terminal can efficiently determine a mobility management policy to be used, thereby improving the mobility management efficiency of the terminal. FIG. 6 is a schematic flowchart of a communication method according to an embodiment of this application. As shown in FIG. 6, the method may include the following steps.

S610: A source network device sends first information to a first terminal, and the first terminal correspondingly receives the first information.

The first information indicates whether a beam position in which a first terminal is located is in a first beam position set of a source network device. Specific content of the first information may be flexibly set. For example, the first information may include the first beam position set. A beam position in the first beam position set is a beam position of the source network device, and each beam position in the first beam position set includes a beam position of a target network device. In other words, the first beam position set may also be referred to as a set including beam positions with overlapping coverage (also referred to as joint coverage) by the target network device and the source network device. How the source network device determines the first beam position set is described below. Beam position configuration information may be transmitted between the source network device and the target network device by multiplexing an existing Xn interface or NG interface, or by defining a new interface protocol. The beam position configuration information includes a third beam position set of the target network device. The source network device caches a second beam position set of the source network device. The second beam position set or the third beam position set includes region information (which may also be referred to as a beam position pattern) of the beam position set, for example, a total quantity or radii of beam positions in the beam position set, and indication information (for example, a number or an identifier) of each beam position in the beam position set in the pattern. The source network device may compare the second beam position set with the third beam position set, to determine beam positions in the second beam position set that have overlapping coverage with beam positions in the third beam position set. The beam positions having overlapping coverage form the first beam position set.

For example, as shown in FIG. 7, a large hexagon represents a beam position of a source network device, a small hexagon represents a beam position of a target network device, and beam positions of two middle source network devices and a beam position of one right source network device each include the beam position of the target network device. In this example, the first beam position set includes the beam positions of the two middle source network devices and the beam position of the right source network device.

In a scenario in which the first information includes the first beam position set and the second beam position set, the terminal determines, based on location information of the terminal, whether the terminal is in the first beam position set. For example, the location information of the terminal may be GNSS information. A specific determining process in which the terminal determines whether the terminal is in the first beam position set is described in S810 below.

In another implementation, the first information may further directly indicate whether the beam position in which the first terminal is located is in the first beam position set. For example, if the first information is 1, it indicates that the beam position in which the first terminal is located is in the first beam position set, or if the first information is 0, it indicates that the beam position in which the first terminal is located is not in the first beam position set. In this scenario, the source network device has obtained the location information of the first terminal, and the source network device may directly determine, based on the location information of the first terminal, whether the first terminal is in the first beam position set. Specifically, determining may be performed according to the Fibonacci criterion described in S810 below. Details are not described herein. The first information may be carried in various messages. For example, the first message may be carried in a system information block (system information block, SIB).

S620: The first terminal performs mobility management based on the first information.

After receiving the first information, the first terminal may perform the mobility management based on the first information, for example, determine whether to perform cell reselection or cell redirection. Specifically, if the first information indicates that the beam position in which the first terminal is located is in the first beam position set, the first terminal may perform cell reselection, cell redirection, or the like based on a state (for example, a connected state, an idle state, or an inactive state) of the first terminal. How to perform mobility management is described below with reference to the state of the terminal. In addition, if the first information indicates that the beam position in which the first terminal is located is not in the first beam position set, the first terminal may maintain a current cell.

If it is determined that cell reselection or cell redirection is to be performed, the source network device may send configuration information of the cell reselection or the cell redirection to the first terminal, for example, the third beam position set of the target network device and frequency group information of the target network device. Therefore, mobility management of the first terminal is implemented.

In this embodiment of this application, the source network device indicates the first terminal by using the first information, whether the beam position in which the first terminal is located is in the first beam position set, and the first terminal may perform mobility management based on the first information, to reduce signaling overheads of mobility management of the first terminal, thereby improving mobility management efficiency of the first terminal.

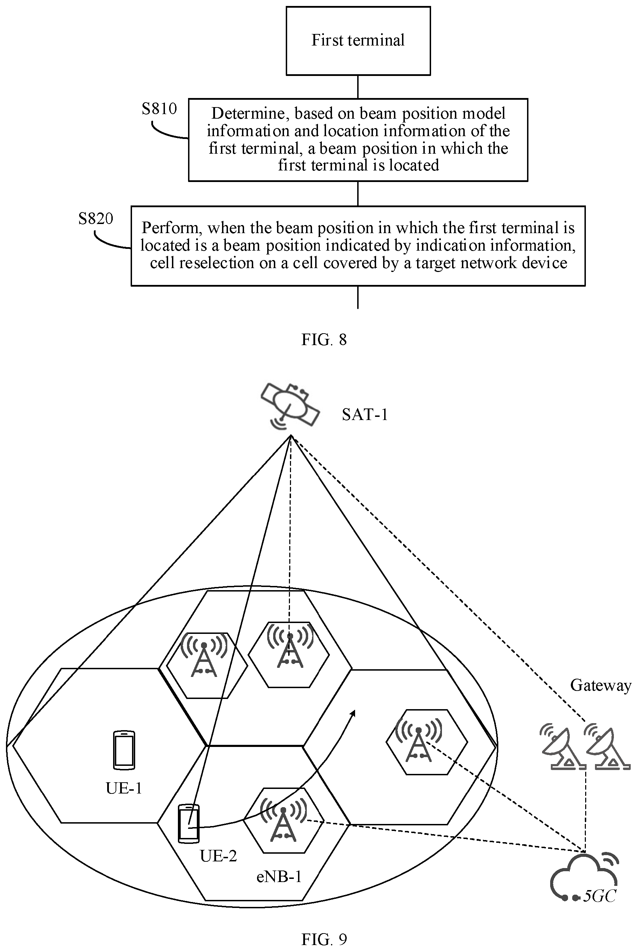

In an embodiment, as shown in FIG. 8, when the first terminal is in the idle state or the inactive state, the performing mobility management based on the first information includes the following steps.

S810: The first terminal determines, based on beam position model information and the location information of the first terminal, a beam position in which the first terminal is located.

The first information includes beam position model information of the first beam position set and indication information of the beam position in the first beam position set. In other words, the source network device does not directly indicate whether the beam position in which the first terminal is located is in the first beam position set, which needs to be determined by the first terminal based on the first information. A determining rule for determining the beam position in which the first terminal is located may be preset in first terminal. For example, the determining rule may be designed according to the Fibonacci criterion. Specifically, the first terminal may calculate a reference location of a beam position in a beam position model based on the beam position model information until a reference location including a location of the first terminal is calculated, and determine a beam position of the reference location as the beam position in which the first terminal is located. For example, a reference location *i* of a beam position *RL*(*i*) may satisfy the following relationship: $RL \left(i\right) = {R}_{e} \times \left(cos {φ}_{i} sin {θ}_{i},sin {φ}_{i} sin {θ}_{i},cos {θ}_{i}\right)$ ${φ}_{i} = 2 π \left[\frac{2 i}{1 + \sqrt{5}}\right]$ ${θ}_{i} = {cos}^{- 1} \left(1-\frac{2 i + 1}{{N}_{spot}}\right) , i ∈ \left\{0,⋯,{N}_{spot}-1\right\}$ where *Nₛₚₒₜ* represents a quantity of beam positions, [*x*] represents a decimal part of *x,* and if *x* = 2.3, [*x*] = 0.3. A form of the foregoing criterion may alternatively be equivalently converted into a longitude and latitude location. A specific representation form of the reference location is not limited in embodiments of this application. For example, it may be given that a projection *RL*(*i*) of *RL*(*xᵢ, yᵢ*) on a unit square (unit square) satisfies the following relationship: $RL \left({x}_{i}\right) = \left(1-{cosθ}_{i}\right) / 2$ $RL \left({y}_{i}\right) = {φ}_{i} {\left(2π\right)}^{- 1}$

In another example, Cartesian coordinates *RL*(*xᵢ*, *yᵢ*) of a corresponding planar Fibonacci grid may alternatively be given: $RL \left({x}_{i}\right) = i / {N}_{spot}$ $RL \left({y}_{i}\right) = frac \left(\frac{i}{∅}\right) , ∅ = \frac{1 + \sqrt{5}}{2}$ where the *frac*(*z*) function represents returning a decimal part of *z*.

Alternatively, *RL*(*i*) may satisfy the following relationship: $RL \left(i\right) = {R}_{e} \times \left(\sqrt{1 - {z}_{i}^{2}}cos 2πi ∅,\sqrt{1 - {z}_{i}^{2}}sin 2πi ∅,{z}_{i}\right)$ ${z}_{i} = \frac{2 i - 1}{{N}_{spot}} - 1 , i ∈ \left\{1, ⋯, {N}_{spot}\right\}$ $∅ = \frac{1 + \sqrt{5}}{2}$

*Rₑ* is the radius of the earth, and a typical value is 6378 km. A quantity *Nₛₚₒₜ* of beam positions and radii *Rₛₚₒₜ* of the beam positions satisfy the following relationship: ${N}_{spot} = \frac{8 {πR}_{e}^{2}}{3 \sqrt{3} {R}_{spot}^{2}}$

Longitude and latitude of the reference location may be expressed as *RL*(*i*) = (lon(*i*), lat(*i*)) $lon \left(i\right) = {sin}^{- 1} \left(\frac{2 i}{2 N + 1}\right)$ $lat \left(i\right) = 2 πi {∅}^{- 1}$ where lon represents the longitude, lat represents the latitude, 2*N +* 1=*Nₛₚₒₜ*, and a unit of lon(*i*) and lat(*i*) is a radian rad.

It should be understood that the foregoing rule for determining the reference location is an example for description. In a specific implementation, another determining rule may be further designed. This is not limited.

S820: Perform, when the beam position in which the first terminal is located is a beam position indicated by the indication information, cell reselection on the cell covered by the target network device.

The first terminal is in the idle state or the inactive state, and there is a possibility of cell reselection. If the beam position in which the first terminal is located is the beam position indicated by the indication information, it indicates that the beam position in which the first terminal is located is in the first beam position set, and cell reselection is performed on the cell covered by the target network device. Information (for example, a frequency, a priority, a subcarrier spacing (sub carrier spacing, SCS), and measurement configuration information (SSB-based measurement timing configuration, SMTC)) used by the first terminal to perform cell reselection may be preconfigured by the source network device for the first terminal. Alternatively, the source network device immediately sends the information to the first terminal. In other words, after it is determined that the beam position in which the first terminal is located is in the first beam position set, the source network device sends the information to the first terminal. The implementation is described in S111-S112.

For example, as shown in FIG. 9, in this scenario, the source network device is a non-terrestrial communication network device, for example, a SAT-1, and the target network device is a terrestrial communication network device, for example, an eNB-1. A UE2 moves along an arrow direction. In this case, the UE2 may perform reselection from a cell corresponding to a beam position of the UE2 covered by the SAT-1 to a cell covered by the eNB-1.

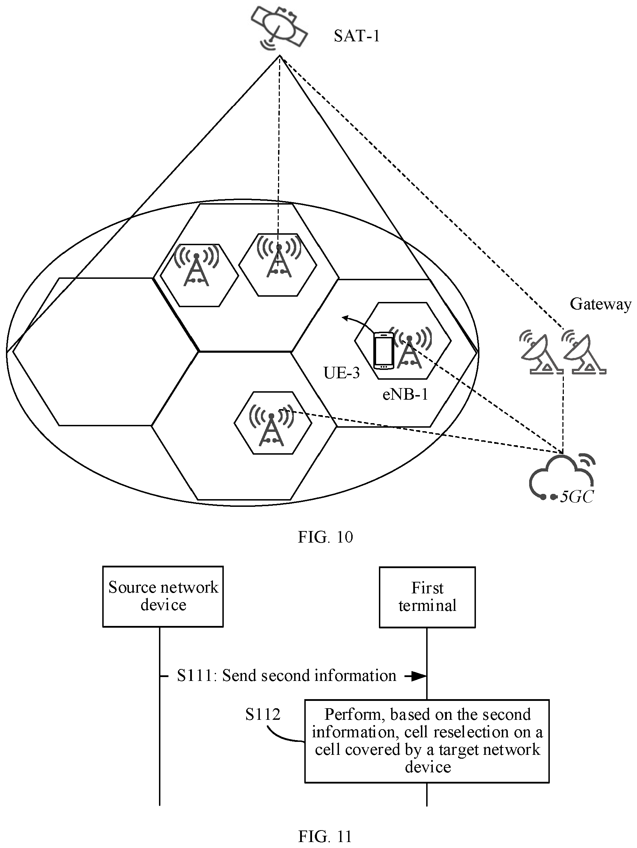

In still another example, as shown in FIG. 10, in this scenario, the target network device is a non-terrestrial communication network device, for example, a SAT-1, and the source network device is a terrestrial communication network device, for example, an eNB-1. A UE3 moves along an arrow direction. In this case, the UE3 may perform reselection from a cell covered by the eNB-1 to a cell covered by the SAT-1.

In this embodiment of this application, when the first terminal is in the idle state or the inactive state and the beam position in which the first terminal is located is in the first beam position set, cell reselection is performed on the cell covered by the target network device, thereby improving mobility management efficiency of the first terminal.

In an embodiment, the network device may further determine whether the beam position in which the first terminal is located is in the first beam position set. In this scenario, when the first terminal is in the idle state or the inactive state, the performing mobility management based on the first information may include:
performing, when the first information indicates that the beam position in which the first terminal is located is in the first beam position set, cell reselection on the cell covered by the target network device.

The first information directly indicates that the beam position in which the first terminal is located is in the first beam position set, and the first terminal does not need to determine, based on a method similar to that in S810, whether the beam position in which the first terminal is located is in the first beam position set (which is determined by the source network device). In this case, the first terminal may directly perform cell reselection on the cell covered by the target network device. For descriptions of performing cell reselection, refer to the descriptions of S820. Details are not described again.

In this embodiment of this application, when the first terminal is in the idle state or the inactive state, and the source network device directly indicates that the beam position in which the first terminal is located is in the first beam position set, cell reselection is performed on the cell covered by the target network device, and the first terminal does not need to determine whether the beam position in which the first terminal is located is in the first beam position set, thereby improving mobility management efficiency of the first terminal.

In an embodiment, as shown in FIG. 11, the performing cell reselection on the cell covered by the target network device includes the following steps/

S111: The source network device sends second information to the first terminal, and the first terminal correspondingly receives the second information.

The second information is used to perform cell reselection on the cell covered by the target network device. Refer to the descriptions of S820. The second information is information used by the first terminal to perform cell reselection. For example, in a scenario in which the source network device is an NTN and the target network device is a TN, the second information may include the third beam position set of the target network device and the frequency group information of the target network device (for example, the third beam position set, a frequency, a priority, a subcarrier spacing SCS, and measurement configuration information SMTC of the target network device). Alternatively, in a scenario in which the source network device is a TN and the target network device is an NTN, the second information includes the frequency group information of the target network device. The second information may be carried in various messages. For example, the second message may be carried in a system information block (system information block, SIB). The second information and the first information described in S610 may be carried in a same SIB, or may be carried in different SIBs. This is not limited.

It should be understood that if the first information indicates that the beam position in which the first terminal is located is not in the first beam position set, the second information does not need to be transmitted, so that unnecessary signaling overheads are saved and a reselection frequency is reduced.

S112: The first terminal performs, based on the second information, cell reselection on the cell covered by the target network device.

After receiving the second information used by the first terminal to perform cell reselection, the first terminal may perform, based on the second information, cell reselection on the cell covered by the target network device.

Specifically, in the scenario in which the source network device is the NTN and the target network device is the TN, the second information includes the third beam position set of the target network device and the frequency group information of the target network device. The first terminal first determines whether the location of the first terminal is in a beam position in the third beam position set. If the location of the first terminal is in the beam position in the third beam position set, cell reselection is performed; otherwise, cell reselection is not performed. In addition, if there are a plurality of TN network devices in the beam position in which the terminal is located, the first terminal may first select, from the plurality of TN network devices, a TN network device with good signal quality (determined based on frequency group information of a corresponding TN network device) as a target network device that is to be redirected to. For a specific reselection process, refer to the conventional technologies. Details are not described.

However, in the scenario in which the source network device is the TN and the target network device is the NTN, the second information includes the frequency group information of the target network device, and the first terminal may select a cell with good signal quality for reselection based on the frequency group information of the target network device. For a specific reselection process, refer to the conventional technologies. Details are not described.

In this embodiment of this application, after it is determined that the beam position in which the first terminal is located is in the first beam position set, the source network device configures, for the first terminal, the second information used to perform cell reselection, thereby ensuring reliability of the cell reselection performed by the first terminal. In addition, signaling overheads of the second information are reduced when the beam position in which the first terminal is located is not in the first beam position set.

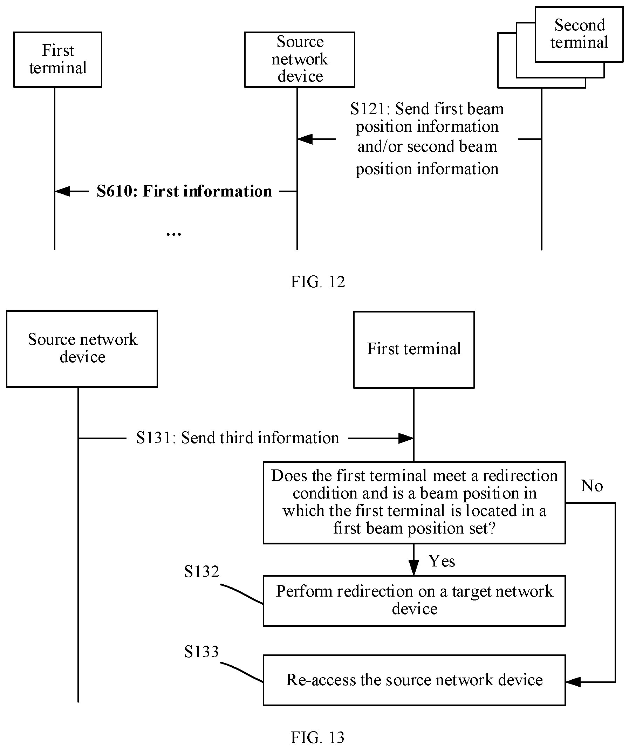

In an embodiment, as shown in FIG. 12, the method further includes the following steps.

S121: A second terminal sends first beam position information and/or second beam position information to the source network device.

The first beam position information indicates a beam position that is of the source network device and in which the second terminal is located, and the second beam position information indicates a beam position that is of the target network device and in which the second terminal is located. The first beam position information can represent a beam position status of the source network device, and the second beam position information can represent a beam position status of the target network device. However, there may be a plurality of second terminals, and the plurality of second terminals each send the first beam position information and/or the second beam position information to the source network device. The first beam position information can be used to determine the second beam position set of the source network device, and the second beam position information can be used to determine the third beam position set of the target network device. In this way, the first beam position set is determined based on the second beam position set and the third beam position set. In other words, the first beam position information and/or the second beam position information can be used to determine the first information.

Specifically, if the second terminal sends the first beam position information to the source network device, the second beam position set may be determined based on the first beam position information, and the first beam position set may be determined with reference to the third beam position set received in S610. Similarly, if the second terminal sends the second beam position information to the source network device, the third beam position set may be determined based on the second beam position information, and the first beam position set may be determined with reference to the second beam position set cached by the source network device and described in S610. However, when the second terminal sends the first beam position information and the second beam position information to the source network device, the second beam position set may be determined based on the first beam position information, and the third beam position set may be determined based on the second beam position information, to determine the first beam position set.

Compared with the second beam position set cached by the source network device and the received third beam position set that are described in S610, the second beam position set determined based on the first beam position information reported by the second terminal and the third beam position set determined based on the second beam position information have stronger timeliness and higher accuracy, and are applied to the mobility management of the first terminal, thereby improving mobility management effectiveness.

If the first beam position information sent by the second terminal to the source network device cannot form a full second beam position set (or the second beam position information cannot form a full third beam position set), the first beam position information may be used to correct the second beam position set cached by the source network device and described in S610, to improve accuracy of the second beam position set. Similarly, the second beam position information may be used to correct the third beam position set received by the source network device and described in S610, to improve accuracy of the third beam position set.

A reporting manner of the first beam position information and/or the second beam position information may be periodic reporting, event-triggered reporting, or the like. This is not limited.

In this embodiment of this application, the second terminal sends, to the source network device, the first beam position information that is of the source network device and in which the second terminal is located and/or the second beam position information that is of the target network device and in which the second terminal is located, so that the source network device can determine a more accurate second beam position set and/or third beam position set, and apply the more accurate second beam position set and/or third beam position set to the mobility management of the first terminal, thereby improving mobility management effectiveness.

In the foregoing embodiments, in a scenario in which the first terminal is in the idle state or the inactive state, the source network device may be the non-terrestrial communication network device, and the target network device may be the terrestrial communication network device; or the source network device may be the terrestrial communication network device, and the target network device may be the non-terrestrial communication network device.

In an embodiment, as shown in FIG. 13, S620 (to be specific, the first terminal performs mobility management based on the first information) may include the following steps.

S131: The source network device sends third information to the first terminal, and the first terminal correspondingly receives the third information.

The first terminal is in the connected state, the source network device is the non-terrestrial communication network device, and the target network device is the terrestrial communication network device. The third information indicates a redirection condition. The redirection condition may be flexibly set based on a communication scenario. For example, the redirection condition may be set to a first terminal type or a service type of the first terminal.

When the first terminal meets the redirection condition and the beam position in which the first terminal is located is in the first beam position set, the following step is performed.

S132: The first terminal redirects to the target network device.

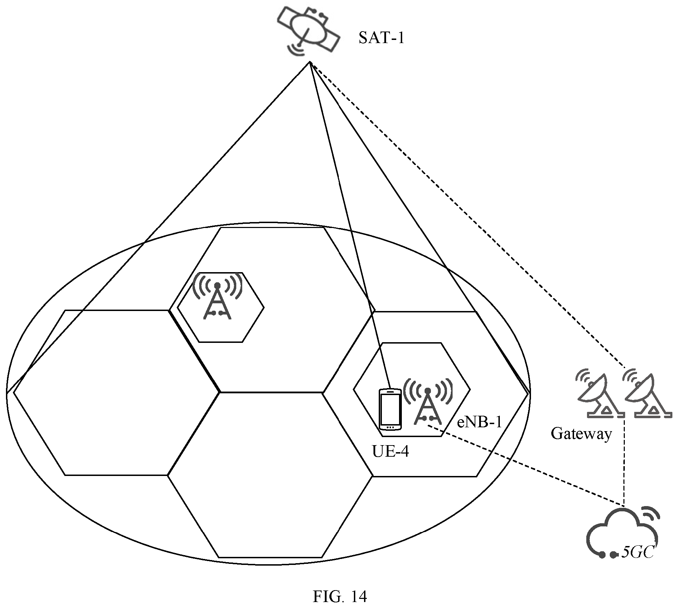

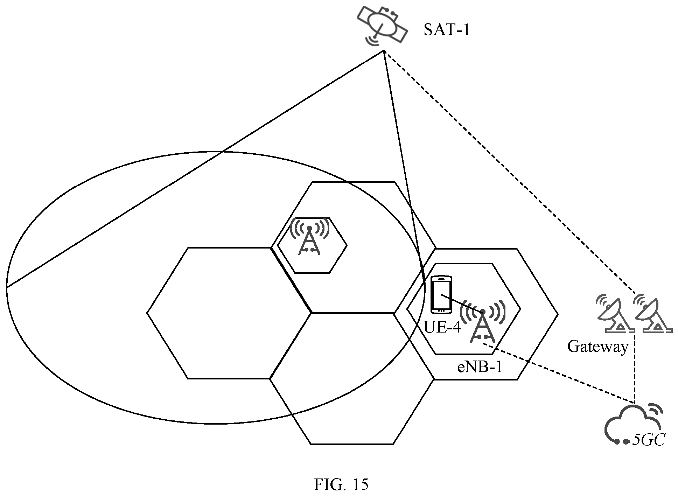

The first terminal redirects to the target network device. Specifically, the first terminal initiates random access to the target network device. For example, as shown in FIG. 14, in this scenario, the source network device is the non-terrestrial communication network device: the SAT-1, and the target network device is the terrestrial communication network device, for example, the eNB-1. If UE4 meets the redirection condition, and a beam position in which the UE4 is located is in the first beam position set, the UE4 may redirect to the eNB-1, that is, initiate random access to the eNB-1. A scenario after the access is shown in FIG. 15. The UE4 is disconnected from the SAT-1, and a coverage region of the SAT-1 does not overlap a coverage region of the eNB-1. In this way, early access to a terrestrial network is implemented.

Information (for example, the third beam position set, the frequency, the priority, the subcarrier spacing (sub carrier spacing, SCS), and the measurement configuration information (SSB-based measurement timing configuration, SMTC) of the target network device) used by the first terminal to perform redirection may be preconfigured by the source network device for the first terminal. Alternatively, the source network device immediately sends the information to the first terminal. In other words, after it is determined that S132 is to be performed, the source network device sends the information to the first terminal.

A redirection scenario is generally redirection from the NTN network device to the TN network device. During redirection, the first terminal first determines whether the location of the first terminal is in the beam position in the third beam position set. If the location of the first terminal is in the beam position in the third beam position set, redirection is performed; otherwise, redirection is not performed temporarily. In addition, if there are a plurality of TN network devices in the beam position in which the terminal is located, the first terminal may first select, from the plurality of TN network devices, a TN network device with good signal quality (determined based on frequency group information of a corresponding TN network device) as a target network device on which redirection is to be performed. For a specific redirection process, refer to the conventional technologies. Details are not described.

However, when the first terminal does not meet the redirection condition and/or the beam position in which the first terminal is located is not in the first beam position set, the following step is performed.

S133: The first terminal re-accesses the source network device.

If the first terminal is disconnected from the source network device when determining whether to redirect to the target network device, the first terminal may re-access the source network device when the first terminal determines not to perform redirection.

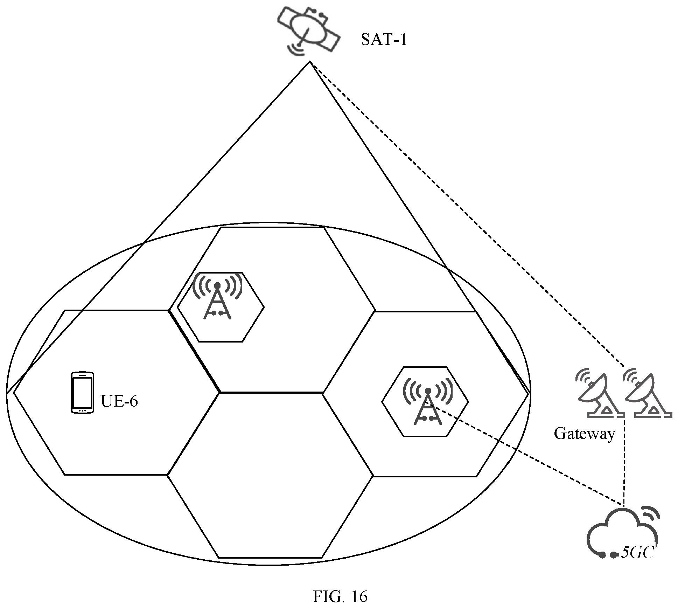

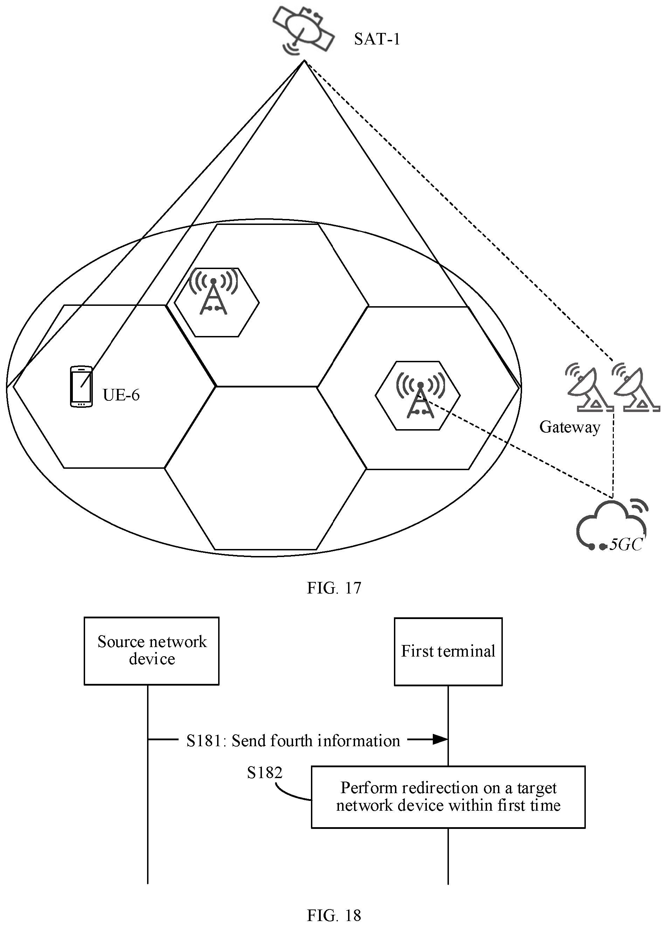

For example, as shown in FIG. 16, in this scenario, the source network device is the non-terrestrial communication network device: the SAT-1, and the target network device is the terrestrial communication network device, for example, the eNB-1. If a beam position in which a UE6 is located is not in the first beam position set (the UE6 may not meet the redirection condition, and in this example, descriptions are provided by using an example in which the beam position in which the UE6 is located is not in the first beam position set), the UE6 is disconnected from the source network device, and re-searches for and re-accesses the source network device. In other words, access is initiated to the SAT-1. A scenario after the access is shown in FIG. 17. The UE6 accesses the source network device: the SAT-1.

It should be understood that, in embodiments of this application, mobility management of each first terminal is independently described in the scenarios in FIG. 9, FIG. 10, and FIG. 14 to FIG. 17. However, in a specific implementation, each first terminal may be in a same communication network. In other words, different first terminals may simultaneously perform respective mobility management. This is not limited.

In this embodiment of this application, the first terminal may determine, based on the redirection condition and depending on whether the beam position in which the first terminal is located is in the first beam position set, whether to redirect to the target network device or re-access the source network device, to reduce a mobility management frequency, thereby improving mobility management efficiency of the first terminal.

In an embodiment, as shown in FIG. 18, the method may further include the following step.

S181: The source network device sends fourth information to the first terminal, and the first terminal correspondingly receives the fourth information.

The fourth information indicates first time for the first terminal to redirect to the target network device.

Correspondingly, in this embodiment, S132 (to be specific, the first terminal redirects to the target network device) may include the following step. S182: The first terminal redirects to the target network device within the first time.

In this embodiment of this application, the source network device indicates a redirection time of the first terminal, so that the first terminal can be redirected to the target network device, thereby improving mobility management effectiveness.

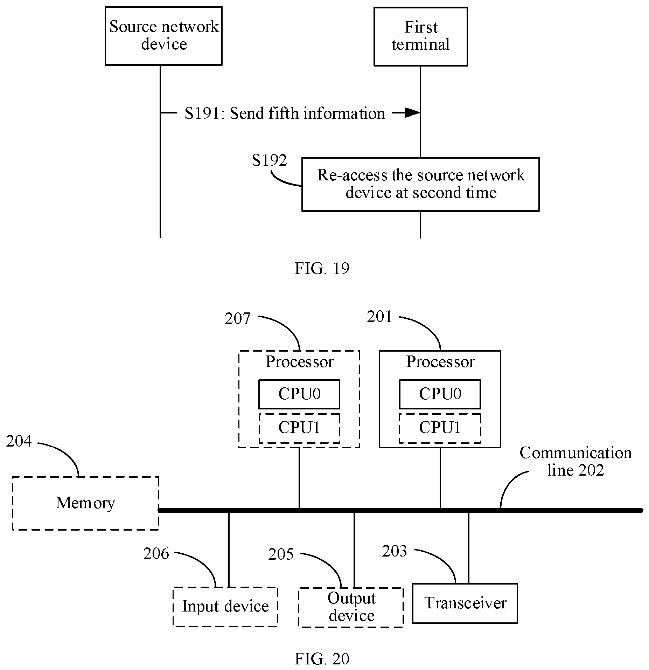

In an embodiment, as shown in FIG. 19, the method further includes the following steps.

S191: The source network device sends fifth information to the first terminal, and the first terminal correspondingly receives the fifth information.

The fifth information indicates second time at which the source network device starts a service.

In this embodiment, S133 (to be specific, the first terminal re-accesses the source network device) may include the following step. S192: The first terminal re-accesses the source network device at the second time.

In this embodiment of this application, the source network device indicates, to the first terminal, the time at which the source network device starts the service, so that it can be ensured that the source network device is re-accessed, thereby improving mobility management effectiveness.

In conclusion, in embodiments of this application, to improve mobility management efficiency of the first terminal, a specific mobility management design is provided for a possible communication scenario (for example, reselection or redirection) of the first terminal. On the premise that signaling overheads are small, the first terminal can efficiently determine a mobility management policy to be used, thereby improving the mobility management efficiency of the first terminal.

The foregoing mainly describes the solutions provided in embodiments of this application from a perspective of execution logic of each step. It may be understood that to implement the foregoing functions, each node such as the terminal includes a corresponding hardware structure and/or software module for performing each function. A person skilled in the art should easily be aware that, in combination with algorithm steps of the examples described in embodiments disclosed in this specification, the methods in embodiments of this application can be implemented by hardware, software, or a combination of hardware and computer software. Whether a function is performed by hardware or computer software driving hardware depends on particular applications and design constraints of the technical solutions. A person skilled in the art may use different methods to implement the described functions for each particular application, but it is not considered that such implementation is outside the scope of this application.

In embodiments of this application, the terminal may be divided into functional modules based on the foregoing method examples. For example, functional modules may be obtained through division based on functions, or two or more functions may be integrated into one processing module. The foregoing integrated module may be implemented in a form of hardware, or may be implemented in a form of a software functional module. It should be noted that, in embodiments of this application, the module division is an example, is merely logical function division, and may be other division in an actual implementation.

In a specific implementation, each network element shown in this application may use a composition structure shown in FIG. 20 or include components shown in FIG. 20. FIG. 20 is a diagram of a structure of a communication apparatus according to an embodiment of this application. When the communication apparatus has functions of the terminal in embodiments of this application, the communication apparatus may be a terminal, or a chip or a system-on-a-chip in the terminal. When the communication apparatus has a function of the network device in embodiments of this application, the communication apparatus may be a network device, or a chip or a system-on-a-chip in the network device.

As shown in FIG. 20, the communication apparatus may include a processor 201, a communication line 202, a transceiver 203, and a memory 204. The processor 201, the memory 204, and the transceiver 203 may be connected through the communication line 202. In an example, the processor 201 may include one or more CPUs, for example, a CPU0 and a CPU1 in FIG. 20.

In an optional implementation, the communication apparatus includes a plurality of processors. For example, in addition to the processor 201 in FIG. 20, the communication apparatus may further include a processor 207.

The processor 201 may be a central processing unit (central processing unit, CPU), a general-purpose processor network processor (network processor, NP), a digital signal processor (digital signal processing, DSP), a microprocessor, a microcontroller, a programmable logic device (programmable logic device, PLD), or any combination thereof. The processor 201 may further be another apparatus having a processing function, for example, a circuit, a device, or a software module.

The communication line 202 is configured to transfer information between various components included in the communication apparatus.

The transceiver 203 is configured to communicate with another device or another communication network. The another communication network may be an Ethernet, a radio access network (radio access network, RAN), a wireless local area network (wireless local area network, WLAN), or the like. The transceiver 203 may be an interface circuit, a pin, a radio frequency module, a transceiver, or any apparatus that can implement communication.

Further, the communication apparatus may further include a memory 204. The memory 204 is configured to store instructions. The instructions may be a computer program.

The memory 204 may be a read-only memory (read_only memory, ROM) or another type of static storage device that can store static information and/or instructions, may be a random access memory (random access memory, RAM) or another type of dynamic storage device that can store information and/or instructions, or may be an electrically erasable programmable read-only memory (electrically erasable programmable read_o20ly memory, EEPROM), a compact disc read-only memory (compact disc read_o20ly memory, CD_ROM) or another optical disk storage, an optical disc storage, a magnetic disk storage medium, or another magnetic storage device. The optical disc storage includes a compressed optical disc, a laser disc, an optical disc, a digital versatile disc, a Blu-ray disc, or the like.

It should be noted that the memory 204 may exist independently of the processor 201, or may be integrated with the processor 201. The memory 204 may be configured to store instructions or program code or some data, or the like. The memory 204 may be located in the communication apparatus, or may be located outside the communication apparatus. This is not limited. When executing the instructions stored in the memory 204, the processor 201 may implement the method provided in embodiments of this application.

In an optional implementation, the communication apparatus further includes an output device 205 and an input device 206. For example, the input device 206 is a device such as a keyboard, a mouse, a microphone, or a joystick, and the output device 205 is a device such as a display screen or a speaker (speaker).

It should be noted that the communication apparatus may be a desktop computer, a portable computer, a network server, a mobile phone, a tablet computer, a wireless terminal, an embedded device, a chip system, or a device having a similar structure in FIG. 20. In addition, the composition structure shown in FIG. 20 does not constitute a limitation on the communication apparatus. In addition to the component shown in FIG. 20, the communication apparatus may include more or fewer components than those shown in the figure, or some merged components, or different component arrangements.

In this embodiment of this application, the chip system may include a chip, or may include a chip and another discrete device.

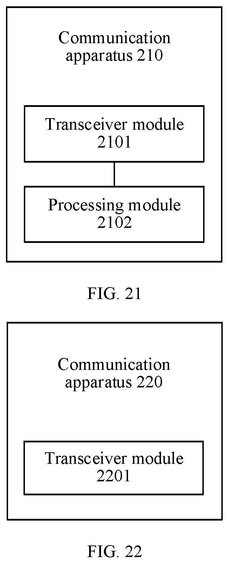

FIG. 21 is a diagram of a structure of a communication apparatus 210. The communication apparatus is used in a terminal. Each module in the apparatus shown in FIG. 21 have functions of implementing corresponding steps in the communication method provided in embodiments of this application, and can achieve corresponding technical effects. For beneficial effect corresponding to steps performed by each module, refer to the descriptions of the corresponding steps. Details are not described again. The function may be implemented by hardware, or may be implemented by hardware by executing corresponding software. The hardware or the software includes one or more modules corresponding to the foregoing functions. The communication apparatus may be a terminal or a chip or a system-on-a-chip in the terminal. For example, the communication apparatus includes:
a transceiver module 2101, configured to receive first information, where the first information indicates whether a beam position in which the terminal is located is in a first beam position set, a beam position in the first beam position set is a beam position of a source network device, and each beam position in the first beam position set includes a beam position of a target network device; and a processing module 2102, configured to perform mobility management based on the first information.

FIG. 22 is a diagram of a structure of a communication apparatus 220. The communication apparatus is used in a source network device. Each module in the apparatus shown in FIG. 22 have functions of implementing corresponding steps in the communication method provided in embodiments of this application, and can achieve corresponding technical effects. For beneficial effect corresponding to steps performed by each module, refer to the descriptions of the corresponding steps. Details are not described again. The function may be implemented by hardware, or may be implemented by hardware by executing corresponding software. The hardware or the software includes one or more modules corresponding to the foregoing functions. The communication apparatus may be a source network device, or a chip or a system-on-a-chip in the source network device. For example, the communication apparatus includes:
a transceiver module 2201, configured to obtain and send first information, where the first information indicates whether a beam position in which a terminal is located is in a first beam position set, a beam position in the first beam position set is a beam position of a source network device, each beam position in the first beam position set includes a beam position of a target network device, and the first information is used to perform mobility management on the terminal.

An embodiment of this application further provides a communication system. The communication system includes a terminal and a source network device. The terminal may have a function of the communication apparatus shown in FIG. 21, and the source network device may have a function of the communication apparatus shown in FIG. 22.

An embodiment of this application further provides a computer-readable storage medium. All or some of the processes in the foregoing method embodiments may be implemented by a computer program instructing related hardware. The program may be stored in a computer-readable storage medium. When the program is executed, the processes in the foregoing method embodiments may be included. The computer-readable storage medium may be an internal storage unit of the terminal apparatus according to any one of the foregoing embodiments, for example, including a data transmitting end and/or a data receiving end. For example, the computer-readable storage medium may be a hard disk or a memory of the terminal apparatus. Alternatively, the computer-readable storage medium may be an external storage device of the terminal apparatus, for example, a plug-in hard disk, a smart media card (smart media card, SMC), a secure digital (secure digital, SD) card, or a flash card (flash card) that is configured on the terminal apparatus. Further, the computer-readable storage medium may include both an internal storage unit and an external storage device of the terminal apparatus. The foregoing computer-readable storage medium is configured to store the foregoing computer program and another program and data required by the foregoing terminal apparatus. The foregoing computer-readable storage medium may be further configured to temporarily store data that has been output or is to be output.

An embodiment of this application further provides computer instructions. All or some of the procedures in the foregoing method embodiment may be completed by the computer instructions by instructing relevant hardware (for example, a computer, a processor, a network device, and a terminal). The program may be stored in the foregoing computer-readable storage medium.

An embodiment of this application further provides a chip system. The chip system may include a chip, or may include a chip and another discrete device. This is not limited. The chip system includes a processor and a transceiver. All or some of the procedures in the foregoing method embodiments may be completed by the chip system. For example, the chip system may be configured to implement the functions performed by the network device or the terminal in the foregoing method embodiments.

In a possible design, the foregoing chip system further includes a memory. The memory is configured to store program instructions and/or data. When the chip system runs, the processor performs the program instructions stored in the memory, so that the chip system performs the functions performed by the network device or the terminal in the foregoing method embodiments.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor or the like. The steps of the method disclosed with reference to embodiments of this application may be directly performed by a hardware processor, or may be performed by using a combination of hardware in the processor and a software module.

In embodiments of this application, the memory may be a non-volatile memory such as a hard disk drive (hard disk drive, HDD) or a solid-state drive (solid-state drive, SSD) or the like, or may be a volatile memory (volatile memory) such as a random access memory (random-access memory, RAM). The memory is any other medium that can be configured to carry or store desired program code in a form of instructions or a data structure and that can be accessed by a computer, but is not limited thereto. Alternatively, the memory in embodiments of this application may be a circuit or any other apparatus that can implement a storage function, and is configured to store instructions and/or data.

Through the descriptions of the foregoing implementations, a person skilled in the art may clearly understand that for a purpose of convenient and brief description, division into the foregoing functional modules is merely used as an example for illustration. During actual application, the foregoing functions may be allocated to different functional modules for implementation based on a requirement. In other words, an inner structure of an apparatus is divided into different functional modules to implement all or some of the functions described above.

In embodiments provided in this application, it should be understood that the disclosed apparatus and method may be implemented in another manner. For example, the described apparatus embodiment is merely an example. For example, the module or unit division is merely logical function division and may be other division in an actual implementation. For example, a plurality of units or components may be combined or integrated into another apparatus, or some features may be ignored or not performed. In addition, the displayed or discussed mutual coupling or direct coupling or communication connection may be implemented through some interfaces. The indirect coupling or communication connection between the apparatuses or units may be implemented in an electronic, mechanical, or another form.

The units described as separate parts may or may not be physically separated. A part displayed as a unit may be one physical unit or a plurality of physical units, located at the one position, or may be distributed to different positions. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The foregoing integrated unit may be implemented in a form of hardware, or may be implemented in a form of a software functional unit. When the integrated unit is implemented in the form of a software functional unit and sold or used as an independent product, the integrated unit may be stored in a readable storage medium. Based on such an understanding, the technical solutions in embodiments of this application essentially, or the part that makes a contribution to the conventional technologies, or all or some of the technical solutions may be embodied in a form of a software product. The software product is stored in a storage medium and includes several instructions for enabling a device, for example, a single-chip microcomputer, a chip, or the like, or a processor (processor) to perform all or some of the steps of the methods described in embodiments of this application. However, the foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A communication method, comprising:
receiving first information, wherein the first information indicates whether a beam position in which a first terminal is located is in a first beam position set of a source network device, and each beam position in the first beam position set comprises a beam position of a target network device; and
performing mobility management based on the first information.

2. The communication method according to claim 1, wherein the first terminal is in an idle state or an inactive state, and the performing mobility management based on the first information comprises:
performing, when the beam position in which the first terminal is located is in the first beam position set, cell reselection on a cell covered by the target network device.

3. The communication method according to claim 1 or 2, wherein the first information comprises beam position model information of the first beam position set and indication information of the beam position in the first beam position set, the first terminal is in the idle state or the inactive state, and the performing mobility management based on the first information comprises:
determining, based on the beam position model information and location information of the first terminal, the beam position in which the first terminal is located; and
performing, when the beam position in which the first terminal is located is a beam position indicated by the indication information, cell reselection on the cell covered by the target network device.

4. The communication method according to claim 2 or 3, wherein the performing cell reselection on the cell covered by the target network device comprises:
receiving second information; and
performing, based on the second information, cell reselection on the cell covered by the target network device.

5. The communication method according to any one of claims 1 to 4, wherein the source network device is a non-terrestrial communication network device, and the target network device is a terrestrial communication network device; or
the source network device is a terrestrial communication network device, and the target network device is a non-terrestrial communication network device.

6. The communication method according to claim 1, wherein the first terminal is in a connected state, and the performing mobility management based on the first information comprises:
receiving third information, wherein the third information indicates a redirection condition; and
redirecting to the target network device when the first terminal meets the redirection condition and the beam position in which the first terminal is located is in the first beam position set, wherein the source network device is a non-terrestrial communication network device, and the target network device is a terrestrial communication network device.

7. The communication method according to claim 6, wherein the method further comprises:
receiving fourth information, wherein the fourth information indicates first time for redirecting to the target network device; and
the performing redirection on the target network device comprises:
performing redirection on the target network device within the first time.

8. The communication method according to claim 6, wherein the method further comprises:
re-accessing the source network device when the first terminal does not meet the redirection condition and/or the beam position in which the first terminal is located is not in the first beam position set.

9. The communication method according to claim 8, wherein the method further comprises:
receiving fifth information, wherein the fifth information indicates second time at which the source network device starts a service; and
the re-accessing the source network device comprises:
re-accessing the source network device at the second time.

10. A communication method, comprising:
obtaining first information, wherein the first information indicates whether a beam position in which a first terminal is located is in a first beam position set of a source network device, and each beam position in the first beam position set comprises a beam position of a target network device; and
sending the first information.

11. The communication method according to claim 10, wherein the method further comprises:
sending second information, wherein the second information is used by the first terminal to perform cell reselection on a cell covered by the target network device.

12. The communication method according to claim 10 or 11, wherein the source network device is a non-terrestrial communication network device, and the target network device is a terrestrial communication network device; or
the source network device is a terrestrial communication network device, and the target network device is a non-terrestrial communication network device.

13. The communication method according to claim 10, wherein the method further comprises:
sending third information, wherein the third information indicates a redirection condition.

14. The communication method according to claim 13, wherein the method further comprises:
sending fourth information, wherein the fourth information indicates first time for redirecting to the target network device.

15. The communication method according to claim 13 or 14, wherein the method further comprises:
sending fifth information, wherein the fifth information indicates second time at which the source network device starts a service.

16. The communication method according to any one of claims 10 to 15, wherein the method further comprises:
receiving first beam position information of a beam position that is of the source network device and in which at least one second terminal is located and/or second beam position information of a beam position that is of the target network device and in which the at least one second terminal is located, wherein the first beam position information and the second beam position information are used to determine the first information.

17. A communication apparatus, comprising:
a transceiver module, configured to receive first information, wherein the first information indicates whether a beam position in which a first terminal is located is in a first beam position set of a source network device, and each beam position in the first beam position set comprises a beam position of a target network device; and
a processing module, configured to perform mobility management based on the first information.

18. The communication apparatus according to claim 17, wherein the first terminal is in an idle state or an inactive state, and the processing module is specifically configured to:
perform, when the beam position in which the first terminal is located is in the first beam position set, cell reselection on a cell covered by the target network device.

19. The communication apparatus according to claim 17 or 18, wherein the first information comprises beam position model information of the first beam position set and indication information of the beam position in the first beam position set, the first terminal is in the idle state or the inactive state, and the processing module is specifically configured to:
determine, based on the beam position model information and location information of the first terminal, the beam position in which the first terminal is located; and
perform, when the beam position in which the first terminal is located is a beam position indicated by the indication information, cell reselection on the cell covered by the target network device.

20. The communication apparatus according to claim 18 or 19, wherein the processing module is specifically configured to:
control the transceiver module to receive second information; and
perform, based on the second information, cell reselection on the cell covered by the target network device.

21. The communication apparatus according to any one of claims 17 to 20, wherein the source network device is a non-terrestrial communication network device, and the target network device is a terrestrial communication network device; or
the source network device is a terrestrial communication network device, and the target network device is a non-terrestrial communication network device.

22. The communication apparatus according to claim 17, wherein the first terminal is in a connected state, and the processing module is specifically configured to:
control the transceiver module to receive third information, wherein the third information indicates a redirection condition; and
redirect to the target network device when the first terminal meets the redirection condition and the beam position in which the first terminal is located is in the first beam position set, wherein the source network device is a non-terrestrial communication network device, and the target network device is a terrestrial communication network device.

23. The communication apparatus according to claim 22, wherein the transceiver module is further configured to receive fourth information, wherein the fourth information indicates first time for redirecting to the target network device; and
the processing module is specifically configured to redirect to the target network device within the first time.

24. The communication apparatus according to claim 22, wherein the processing module is further configured to:
re-access the source network device when the first terminal does not meet the redirection condition and/or the beam position in which the first terminal is located is not in the first beam position set.

25. The communication apparatus according to claim 24, wherein the transceiver module is further configured to receive fifth information, wherein the fifth information indicates second time at which the source network device starts a service; and
the processing module is specifically configured to re-access the source network device at the second time.

26. A communication apparatus, comprising:
a transceiver module, configured to obtain first information, wherein the first information indicates whether a beam position in which a first terminal is located is in a first beam position set of a source network device, and each beam position in the first beam position set comprises a beam position of a target network device; and
the transceiver module is further configured to send the first information.

27. The communication apparatus according to claim 26, wherein the transceiver module is further configured to:
send second information, wherein the second information is used by the first terminal to perform cell reselection on a cell covered by the target network device.

28. The communication apparatus according to claim 26 or 27, wherein the source network device is a non-terrestrial communication network device, and the target network device is a terrestrial communication network device; or
the source network device is a terrestrial communication network device, and the target network device is a non-terrestrial communication network device.

29. The communication apparatus according to claim 26, wherein the transceiver module is further configured to:
send third information, wherein the third information indicates a redirection condition.

30. The communication apparatus according to claim 29, wherein the transceiver module is further configured to:
send fourth information, wherein the fourth information indicates first time for redirecting to the target network device.

31. The communication apparatus according to claim 29 or 30, wherein the transceiver module is further configured to:
send fifth information, wherein the fifth information indicates second time at which the source network device starts a service.

32. The communication apparatus according to any one of claims 26 to 31, wherein the transceiver module is further configured to:
receive first beam position information of a beam position that is of the source network device and in which at least one second terminal is located and/or second beam position information of a beam position that is of the target network device and in which the at least one second terminal is located, wherein the first beam position information and the second beam position information are used to determine the first information.

33. A communication apparatus, wherein the communication apparatus comprises a processor, and the processor is configured to perform the method according to any one of claims 1 to 16.

34. A computer-readable storage medium, wherein the computer-readable storage medium stores computer instructions, and when the computer instructions are run, the method according to any one of claims 1 to 16 is performed.

35. A chip, wherein the chip comprises a processor and a communication interface, and the processor and the communication interface are configured to support the chip in performing the method according to any one of claims 1 to 16.

36. A computer program product comprising instructions, wherein when the computer program product runs on a computer, the computer performs the method according to any one of claims 1 to 16.

37. A communication system, wherein the communication system comprises a terminal and a network device, the terminal is configured to perform the method according to any one of claims 1 to 9, and the network device is configured to perform the method according to any one of claims 10 to 16.
